# EUROPEAN PATENT SPECIFICATION

(11) **EP 0 979 700 B1**
(45) Date of publication and mention of the grant of the patent: **02.03.2005**
(21) Application number: 99306332.0
(22) Date of filing: 11.08.1999
(51) Int. Cl.: B23B 29/12, B23B 25/02

(54) **Elliptical vibration cutting method and elliptical vibration cutting apparatus**
Elliptische Schwingungsschneidmethode und elliptisches Schwingungsschneidgerät
Méthode de coupe à vibration ellipique et appareil de coupe à vibration ellipique

(30) Priority: 12.08.1998 JP 24252598
(43) Date of publication of application: 16.02.2000
(73) Proprietor: Towa Corporation, Kyoto (JP); Moriwaki, Toshimichi, Kobe-shi Hyogo (JP); Shamoto, Eiji, Takarazuka-shi Hyogo (JP)
(72) Inventor: MATSUO, Makoto c/o Towa Corporation, Minami-ku, Kyoto-shi, Kyoto (JP); Moriwaki, Toshimichi, Kobe-shi, Hyogo (JP); Shamoto, Eiji, Takarazuka-shi,Hyogo (JP)
(74) Representative: Matthews, Heather Clare

(56) References cited:
- FR-A- 2 178 367
- C.I.R.P. ANNALEN, vol. 10, no. 3, 1961, page 398 XP002155184

## Description

### BACKGROUND OF THE INVENTION

### Field of the Invention

The present invention relates to improvements of an elliptical vibration cutting method and an elliptical vibration cutting apparatus relatively elliptically vibrating a cutting tool with respect to a workpiece such as a steel product, for example, for cutting the workpiece with the cutting tool.

### Description of the Prior Art

In general, a workpiece such as a steel product is cut by a normal cutting method, to be worked into a required shape.

In this method, a cutting tool is relatively progressed with respect to the workpiece in a constant direction, thereby cutting the workpiece by a prescribed amount.

In the normal cutting method, the frictional resistance (cutting resistance) of the workpiece is increased to result in inferior machinability, and hence a chip forwardly cut out from the workpiece is pressed by the cutting tool and increased in thickness.

When normally cutting a ferrous material such as a steel product with a diamond tool for ultraprecision working, the diamond tool is regularly in contact with the ferrous material to generate (frictional) heat on the contact part and provide a high-temperature high-pressure atmosphere. Further, carbon is dispersed in the ferrous material due to the chemical affinity between the diamond tool (carbon) and the ferrous material. Thus, the diamond tool is so easy to wear that the ferrous material cannot be ultraprecisely cut with the diamond tool.

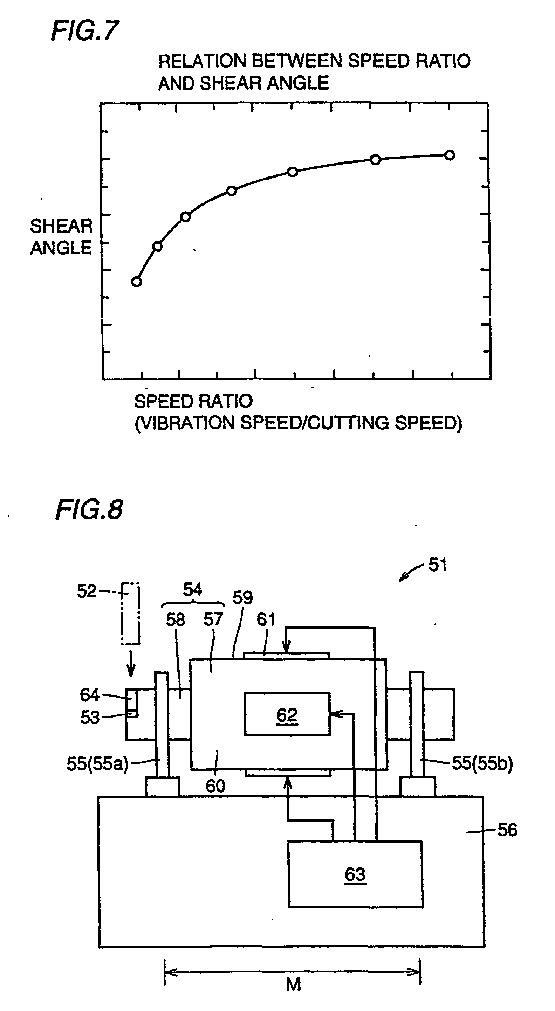

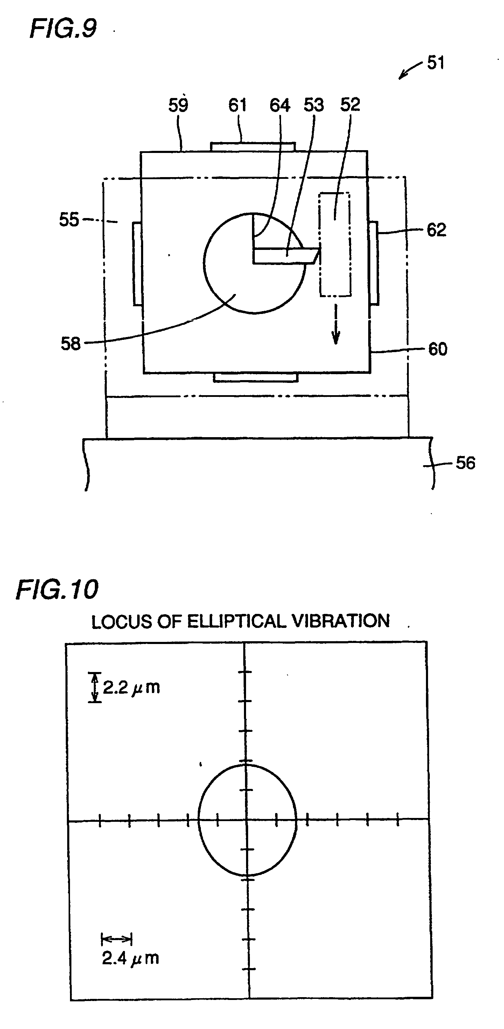

In this regard, elliptical vibration cutting with an elliptical vibration cutting apparatus 51 shown in Figs. 8 and 9 is studied.

This apparatus 51 can reduce cutting resistance, reduce heat conduction to a cutting tool by means of intermittent cutting, provide a cooling time for the cutting tool, and ultraprecisely cut a ferrous material with a diamond tool.

The apparatus 51 shown in Figs. 8 and 9 includes a cutting tool 53 cutting a workpiece 52 such as a steel product, an elliptical vibrator 54 elliptically vibrating the cutting tool 53, support members 55a and 55b supporting the elliptical vibrator 54, and a base 56 for setting the support members 55a and 55b. The elliptical vibrator 54 includes a prismatic body part 57 provided on a central portion of the elliptical vibrator 54 and step horn parts 58 of a single-step horn type projected from both ends of the prismatic body part 57 respectively. One of the step horn parts 58 projected from an end of the prismatic body part 57 is provided with a mounting part 64 for mounting the cutting tool 53.

The apparatus 51 further includes piezoelectric elements 61 and 62 generating elliptical vibration (flexible vibration) in the elliptical vibrator 54 and a control mechanism 63 individually inputting prescribed sinusoidal voltages in the piezoelectric elements 61 and 62 for driving the same. Horizontal surfaces 59 and vertical surfaces 60 on the side surfaces of the prismatic body part 57 define mounting surfaces (planes) for the piezoelectric elements 61 and 62.

The control mechanism 63 individually inputs sinusoidal voltages of the same frequency which are 90 degrees out of phase, for example, in the piezoelectric elements 61 mounted on the horizontal surfaces 59 and the piezoelectric elements 62 mounted on the vertical surfaces 60 for driving the same, thereby generating flexible vibration in the elliptical vibrator 54 in two perpendicular directions (vertical and horizontal directions in Fig. 9) with the support members 55a and 55b forming supporting points for the vibration. The elliptical vibrator 54 can be elliptically vibrated by compositing the vibration.

Following such elliptical vibration of the elliptical vibrator 54, (the cutting edge of) the cutting tool 53 mounted on the mounting part 64 draws a locus of elliptical vibration.

Thus, the apparatus 51 can perform elliptical vibration cutting on the workpiece 52 with the cutting tool 53. In other words, the apparatus 51 can convert electrical energy (sinusoidal voltage) to mechanical energy (flexible vibration and elliptical vibration) with the elliptical vibrator 54.

Referring to Fig. 8, there are three loops of vibration in the distance M between the support members 55a and 55b.

When performing elliptical vibration cutting on the aforementioned ferrous material with a diamond tool, cutting resistance can be reduced and heat conduction to the cutting tool can be reduced by means of intermediate cutting while a cooling time can be provided for the cutting tool and the ferrous material can be ultraprecisely worked with the diamond tool.

When the elliptical vibrator 54 is flexibly (elliptically) vibrated, however, corner portions of the prismatic body part 57 remarkably interfere with (inhibit) the two-directional flexible vibration, to result in remarkable distortion. In correspondence to the amount of interference by the corner portions, therefore, energy loss in the elliptical vibrator 54 is so increased that it is difficult to obtain a desired locus of elliptical vibration.

With the elliptical vibrator 54 having the prismatic body part 57, therefore, the locus of elliptical vibration drawn by the cutting tool 53 cannot be enlarged, disadvantageously leading to inferior machinability of the workpiece 52 cut with the cutting tool 53.

In other words, electrical energy cannot be efficiently converted to mechanical energy with the elliptical vibrator 54 having the prismatic body part 57.

Accordingly, an object of the present invention is, in an elliptical vibration cutting apparatus having an elliptical vibrator, to enlarge a locus of elliptical vibration on the cutting edge of a cutting tool elliptically vibrated by the elliptical vibrator and improve the machinability of a workpiece cut with the cutting tool.

Another object of the present invention is to provide an elliptical vibration cutting apparatus capable of efficiently converting electrical energy to mechanical energy and efficiently performing elliptical vibrating cutting on a workpiece.

### SUMMARY OF THE INVENTION

In one aspect, the invention provides an elliptical vibration cutting apparatus comprising an elliptical vibrator for elliptically vibrating a cutting tool for performing cutting while elliptically vibrating the cutting tool with respect to the workpiece, wherein the elliptical vibrator includes a body part having an outer peripheral surface with a plurality of driving members for driving the elliptical vibrator mounted on then body part, characterised in that the outer peripheral surface includes a curved surface part for reducing interference on elliptical vibration in said elliptical vibrator and enlarging a locus of vibration on the cutting edge of the cutting tool.

According to a preferred feature of the inventive elliptical vibration cutting apparatus, a step horn part in the elliptical vibrator is provided in a multi-step horn shape, thereby enlarging the locus of elliptical vibration on the cutting edge of the cutting tool.

Preferably, the aforementioned step horn part is formed by sequentially providing a horn with horns having smaller sectional areas than the horn.

The aforementioned step horn part may be provided in a two-step horn shape.

The inventive elliptical vibration cutting apparatus may further comprise a tracking mechanism tracking the elliptical vibration and a feedback mechanism finely controlling the elliptical vibration on the basis of a result of tracking by the tracking mechanism.

Further, the inventive elliptical vibration cutting apparatus may further comprise a support member supporting the elliptical vibrator on the position of a node of vibration.

In a further aspect the invention provides an elliptical vibration cutting method employing an Elliptical vibrator for elliptically vibrating a cutting tool for performing cutting while elliptically vibrating said cutting tool with respect to a workpiece, wherein the elliptical vibrator includes a body part having an outer peripheral surface with a plurality of driving members for driving the elliptical vibrator mounted on the body part, characterised in that the outer peripheral surface includes a curved surface part for reducing interference on elliptical vibration in said elliptical vibrator and enlarging a locus of vibration on the cutting edge of said cutting tool.

Step horn parts for amplifying the elliptical vibration are preferably individually projected from both ends of the aforementioned body part, and each step horn part has a large horn provided on the body part and a small horn provided on the large horn. The large horn and the small horn are preferably cylindrical.

According to still another feature of the inventive elliptical vibration cutting method, the elliptical vibration is tracked and detected and finely controlled thereby stabilizing the locus of elliptical vibration on the cutting edge of the cutting tool.

According to the present invention, a body part with an outer peripheral surface including a curved surface part, e.g. a cylindrical body part, is provided on a central portion of the elliptical vibrator provided on the elliptical vibration cutting apparatus, whereby the amount of interference exerted on elliptical vibration of the elliptical vibrator having the body part can be reduced as compared with the case of employing the conventional elliptical vibrator having the prismatic body part. Thus, a desired locus can be readily obtained, and the locus of elliptical vibration drawn by the cutting edge of the cutting tool provided on an end of the elliptical vibrator can be enlarged.

Thus, electrical energy (sinusoidal voltage) can be more efficiently converted to mechanical energy (elliptical vibration) as compared with the prior art.

The amount of interference exerted on the elliptical vibration can be reduced to readily obtain a desired locus, whereby two-directional flexible vibration can be independently (individually) feedback-controlled when the elliptical vibrator having the body part is elliptically vibrated.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic front elevational view schematically showing an elliptical vibration cutting apparatus according to the present invention;
Fig. 2 is a side elevational view schematically showing a side surface of the apparatus shown in Fig. 1; Fig. 3 is an explanatory diagram for illustrating vibrational directions of a cutting tool in the elliptical vibration cutting apparatus according to the present invention;
Fig. 4 is an explanatory diagram for illustrating a cutting principle in the case of generating elliptical vibration in the cutting tool of the elliptical vibration cutting apparatus according to the present invention;
Fig. 5 illustrates a locus of elliptical vibration generated in the cutting tool of the apparatus shown in Fig. 1;
Fig. 6 illustrates the relation between a speed ratio and cutting resistance in the case of performing elliptical vibration cutting with the cutting tool of the elliptical vibration cutting apparatus according to the present invention;
Fig. 7 illustrates the relation between the speed ratio and a shear angle in the case of performing elliptical vibration cutting with the cutting tool of the elliptical vibration cutting apparatus according to the present invention;
Fig. 8 is a schematic front elevational view schematically showing a conventional elliptical vibration cutting apparatus;
Fig. 9 is a schematic side elevational view schematically showing a side surface of the apparatus shown in Fig. 8; and
Fig. 10 illustrates a locus of elliptical vibration generated in a cutting tool in the apparatus shown in Fig. 8.

### DESCRIPTION OF THE PREFERRED EMBODIMENT

An embodiment of the present invention is now described in detail with reference to the drawings.

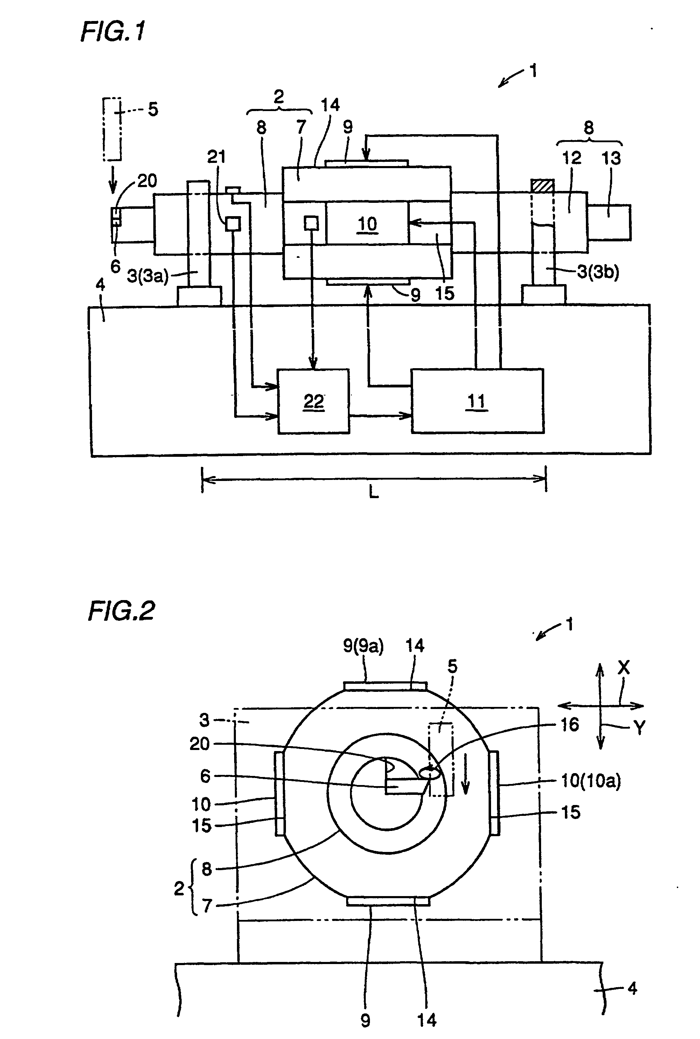

Figs. 1 and 2 show an elliptical vibration cutting apparatus 1 according to the embodiment of the present invention.

The elliptical vibration cutting apparatus 1 shown in Figs. 1 and 2 has a cutting tool 6 for cutting a workpiece 5 such as a steel product, an elliptical vibrator (vibration member) 2 elliptically vibrating (the cutting edge of) the cutting tool 6, support members 3a and 3b supporting the elliptical vibrator 2, and a base 4 for setting the support members 3a and 3b. A mounting part 20 for mounting the cutting tool 6 is provided on an end of the elliptical vibrator 2.

A cylindrical body part 7 is provided on a central portion of the elliptical vibrator 2, while step horn parts 8 of a two-step horn type for amplifying elliptical vibration are individually projected from both ends of the body part 7.

Each step horn part 8 is formed by a cylindrical large horn 12 provided on the cylindrical body part 7 and a cylindrical small horn 13 provided on the large horn 12. The mounting part 20 is provided on (the cylindrical small horn 13 of) one of the step horn parts 8 provided on the elliptical vibrator 2.

As shown in Fig. 1, the step horn parts 8 (the cylindrical large horns 12 in Fig. 1) individually pass through the support members 3a and 3b, so that the elliptical vibrator 2 can be supported in this state. Symbol L denotes the distance between the support members 3a and 3b.

The cylindrical body part 7 of the elliptical vibrator 2 is provided with a required number (four in Figs. 1 and 2) of piezoelectric elements 9 and 10 for generating elliptical vibration in the elliptical vibrator 2. Horizontal surfaces 14 and vertical surfaces 15 are perpendicularly provided on the side surface of the cylindrical body part 7 as piezoelectric element mounting surfaces (planes) for mounting the piezoelectric elements 9 and 10.

Thus, the piezoelectric elements 9 are provided on the horizontal surfaces 14, while the piezoelectric elements 10 are provided on the vertical surfaces 15, as shown in Figs. 1 and 2.

In order to individually drive the piezoelectric elements 9 and 10, a control mechanism 11 is provided for individually inputting prescribed sinusoidal voltages in the piezoelectric elements 9 and 10 and driving/controlling the same. Elliptical vibration (flexible vibration) can be generated in the elliptical vibrator 2 by individually driving the piezoelectric elements 9 and 10 with the control mechanism 11.

The control mechanism 11 individually inputs sinusoidal voltages having prescribed frequencies, prescribed amplitudes and prescribed phases (prescribed phase difference) in the piezoelectric elements 9 and 10.

In the apparatus 1, the elliptical vibrator 2, the piezoelectric elements 9 and 10, the control mechanism 11 and the support members 3a and 3b form elliptical vibration unit elliptically vibrating the cutting tool 6.

The control mechanism 11 inputs a prescribed sinusoidal voltage in the piezoelectric elements 9 provided on the horizontal surfaces 14, thereby generating flexible vibration in the elliptical vibrator 2 along a direction Y (vertical direction) with the support members 3a and 3b forming supporting points, while inputting a sinusoidal voltage, having a prescribed phase difference (of 90 degrees, for example) with respect to that input in the piezoelectric elements 9 provided on the horizontal surfaces 14, in the piezoelectric elements 10 provided on the vertical surfaces 15, thereby generating flexible vibration in the elliptical vibrator 2 along a direction X (horizontal direction) with the support members 3a and 3b forming supporting points (see Fig. 2).

Thus, elliptical vibration can be generated on the mounting part 20 for the elliptical vibrator 2 by compositing the flexible vibration by the piezoelectric elements 9 provided on the horizontal surfaces 14 and that by the piezoelectric elements 10 provided on the vertical surfaces 15, while the elliptical vibrator 2 transmits the elliptical vibration to the cutting tool 6, so that the cutting edge of the cutting tool 6 can be elliptically vibrated while drawing a locus 16 (see Fig. 2) of elliptical vibration (the cutting edge of the cutting tool 6 is rotated while drawing the locus 16 of elliptical vibration).

The elliptical vibration in the elliptical vibrator 2 is composited by mechanically resonating the flexible vibration by the piezoelectric elements 9 and that by the piezoelectric elements 10 (two-directional flexible vibration along the directions X and Y in the example shown in Fig. 2).

In the apparatus 1, the control mechanism 11 individually inputs the sinusoidal voltages having a prescribed phase difference in the piezoelectric elements 9 and 10 for driving the same, thereby generating flexible vibration in the elliptical vibrator 2 in correspondence to the piezoelectric elements 9 and 10 respectively. The flexible vibration by the piezoelectric elements 9 and that by the piezoelectric elements 10 are composited thereby generating elliptical vibration in the mounting part 20 for the elliptical vibrator 2 and elliptically vibrating the cutting tool 6, for performing elliptical vibration cutting on the workpiece 5 with the cutting tool 6.

Referring to Figs. 1 and 2, two horizontal surfaces 14 and two vertical surfaces 15 are provided on the side surface of the cylindrical body part 7 as the surfaces for mounting the piezoelectric elements 9 and 10, and the (four) piezoelectric elements 9 and 10 are individually provided on the surfaces 14 and 15 respectively.

In this case, the piezoelectric elements 9 provided on the two horizontal surfaces 14 (or the piezoelectric elements 10 provided on the two vertical surfaces 15) flexibly vibrate the elliptical vibrator 2 in the same direction.

The force flexibly vibrating the elliptical vibrator 2 with the piezoelectric elements 9 and 10 is proportionate to the mounting areas of the piezoelectric elements 9 and 10 mounted on the elliptical vibrator 2. When the areas of the piezoelectric elements 9 and 10 mounted on the elliptical vibrator 2 are increased, therefore, it follows that the force flexibly vibrating the elliptical vibrator 2 is also increased.

The positions of the support members 3a and 3b define nodes (supporting points) of the flexible vibration generated in the elliptical vibrator 2, while the cutting tool 6 (the mounting part 20) is provided on the position of a loop of the flexible vibration, for example.

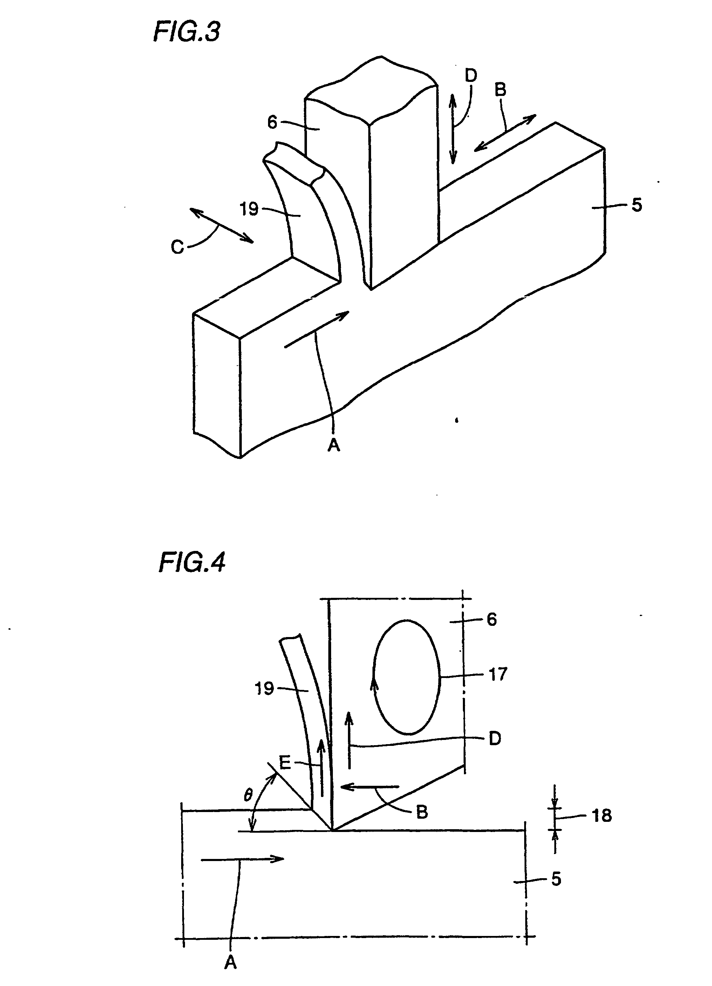

As shown in Fig. 3, the workpiece 5 is moved in a cutting direction A at a prescribed cutting speed (m/min.), so that the workpiece 5 can be cut with the cutting tool 6.

As shown in Fig. 3, further, the cutting tool 6 has three vibrational directions including a cutting force direction B identical to the cutting direction A, a feed force direction C and a thrust force direction D.

As shown in Fig. 4, the forward end of the cutting tool 6 is elliptically vibrated along a locus 17 of periodic elliptical vibration formed by the elliptical vibrator 2. Thus, the cutting tool 6 cuts the workpiece 5 in a prescribed undeformed chip thickness 18.

The elliptical vibration of the cutting tool 6 has speed components in the cutting force direction B and the thrust force direction D.

With reference to Fig. 4, elliptical vibration cutting for cutting the workpiece 5 in the prescribed undeformed chip thickness 18 with the cutting tool 6 is now described.

As shown in Fig. 4, the cutting tool 6 first cuts the workpiece 5 in the cutting force direction B (leftward in Fig. 4) along the locus 17 of elliptical vibration, and is separated from the workpiece 5 in the thrust force direction D (upward in Fig. 4).

At this time, a chip 19 cut out from the workpiece 5 is pulled up in the thrust force direction D (upward in Fig. 4) with the cutting tool 6 to flow out in a chip flow direction E, whereby frictional resistance is reduced or inverted to negative frictional resistance.

Thus, the cutting resistance of the workpiece 5 against the cutting tool 6 is reduced while cutting force of the cutting tool 6 is reduced to improve machinability.

Then, the cutting tool 6 is separated from the chip 19 in the cutting force direction B (rightward in Fig. 4) and moved toward the workpiece 5 along the thrust force direction D (downward in Fig. 4).

Thus, elliptical vibration cutting can be performed on the workpiece 5 by periodically vibrating the cutting tool 6 along the locus 17 of elliptical vibration.

The aforementioned cutting by elliptical vibration has such advantages that the thickness of the chip 19 is reduced, reduction of cutting resistance and mirror-like finishing of hardened steel are enabled, the life of the cutting tool 6 is increased, working shape accuracy is improved, flashes are suppressed, chattering is prevented, and cutting heat is reduced as compared with normal cutting.

Assuming that the undeformed chip thickness 18 of the portion cut out from the workpiece 5 is constant, the amount of the portion cut/removed from the workpiece 5 per unit time is increased as the locus 17 of elliptical vibration is enlarged.

The magnitude of the locus 17 of elliptical vibration is expressed by the vibration speed (the length of the locus 17 of elliptical vibration moving in one minute (m/min.))

The ratio of the vibration speed to the cutting speed is referred to as a speed ratio (vibration speed/cutting speed).

Referring to Fig. 4, symbol θ denotes a shear angle. The shear angle θ is an index of the machinability of the workpiece 5 cut with the cutting tool 6. The machinability of the workpiece 5 is improved as the shear angle θ is increased.

In the elliptical vibration cutting apparatus 1 shown in Figs. 1 and 2, the control mechanism 11 inputs the sinusoidal voltages having prescribed frequencies, prescribed phases and the like in the piezoelectric elements 9 and 10, whereby elliptical vibration having a prescribed frequency (cycle) and a prescribed vibration speed can be generated in the cutting tool 6.

For example, elliptical vibration cutting can be performed by setting the frequency of the elliptical vibration employed therefor in an ultrasonic region (a sonic region of at least 17 KHz, for example, inaudible to human ears).

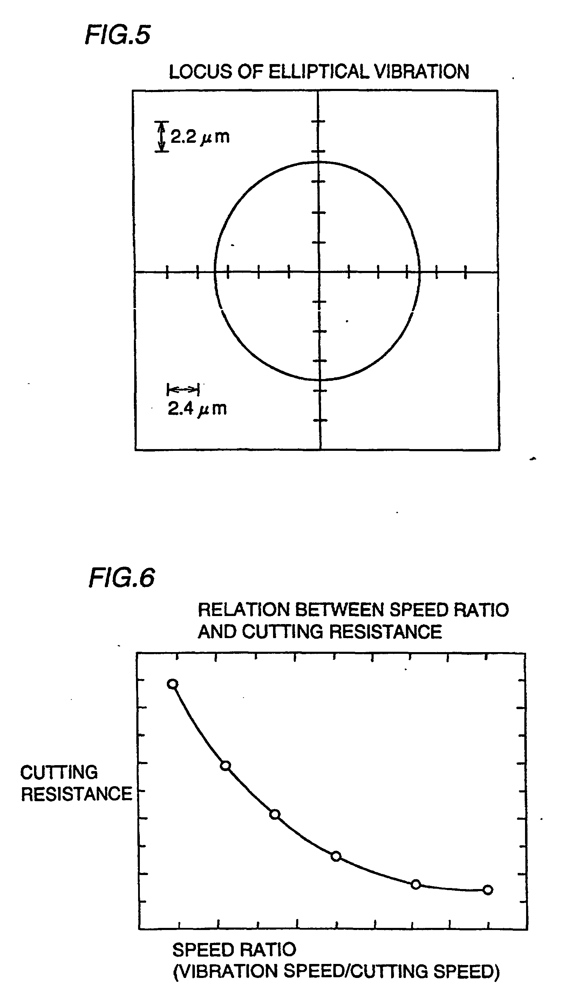

Figs. 5 to 7 show results of elliptical vibration cutting by the apparatus 1 according to the present invention shown in Figs. 1 and 2, while Fig. 10 shows a result of elliptical vibration cutting by the conventional apparatus 51 shown in Figs. 8 and 9.

Referring to Figs. 5, 6, 7 and 10, it is assumed that the frequency of elliptical vibration in the cutting tool is about 20 KHz, the sinusoidal voltages input in the piezoelectric elements are 200 V, and the mounting areas of the piezoelectric elements 9 and 10 employed in the inventive apparatus 1 shown in Figs. 1 and 2 are identical to those of the piezoelectric elements 61 and 62 employed in the conventional apparatus 51 shown in Figs. 8 and 9. The piezoelectric elements 9, 10, 61 and 62 are those of a PZT type.

Fig. 5 shows the locus of elliptical vibration in the inventive apparatus 1 shown in Figs. 1 and 2, and Fig. 10 shows the locus of elliptical vibration in the conventional apparatus 51 shown in Figs. 8 and 9.

The locus of elliptical vibration according to the present invention shown in Fig. 5 is larger than that of elliptical vibration according to the conventional apparatus shown in Fig. 10 under the same input voltages of 200 V, while the vibration speed in the present invention is 60 m/min., i.e., about twice that of about 30 m/min. in the prior art.

Thus, the amount of interference can be reduced in elliptical vibration (flexible vibration) of the elliptical vibrator 2 for reducing energy loss by employing the elliptical vibration cutting apparatus 1 having the elliptical vibrator 2 including the cylindrical body part 7.

Thus, the locus 16 of elliptical vibration drawn by the cutting tool 6 can be enlarged while the machinability of the workpiece 5 cut with the cutting tool 6 can be improved.

The locus 16 of the elliptical vibration is enlarged, whereby the vibration speed can be increased to increase the cutting speed, and the amount of removal per unit time can be increased.

Further, electrical energy can be more efficiently converted to mechanical energy as compared with the conventional apparatus 51, by employing the elliptical vibration cutting apparatus 1 having the elliptical vibrator 2 including the cylindrical body part 7.

When performing elliptical vibration cutting on a ferrous material with a diamond tool, the elliptical vibration cutting is intermittently performed. Therefore, heat conduction to the cutting tool can be reduced for efficiently reducing heat generated in the portion where the diamond tool is in contact with the ferrous material, while carbon can be prevented from diffusion in the ferrous material and the diamond tool can be efficiently prevented from wear.

Therefore, the elliptical vibration cutting apparatus 1 shown in Figs. 1 and 2 can ultraprecisely cut the ferrous material with the diamond tool.

The elliptical vibration cutting apparatus 1 having the elliptical vibrator 2 including the cylindrical body part 7 can enlarge flexible vibration (elliptical vibration), whereby the locus of elliptical vibration can be enlarged and the distance between nodes of vibration in the vibrator 2 can be increased.

Therefore, the distance L between the support members 3a and 3b supporting at the positions of the nodes of vibration is larger (wider) than the distance M between the support members 55a and 55b of the conventional apparatus 51 (L > M).

While vibration in the elliptical vibration cutting apparatus 1 has three loops in general, five loops of vibration can be provided by employing the support members 3a and 3b as supporting points for the nodes of vibration.

As hereinabove described, the step horn parts 8 provided on the elliptical vibrator 2 are formed by the cylindrical large horns 12 and the cylindrical small horns 13, so that the locus of elliptical vibration generated in the cylindrical body part 7 through the piezoelectric elements 9 and 10 can be enlarged by the step horn parts 8.

In other words, each step horn part 8 is provided with the small horn 13 having a small sectional area ratio (sectional area of small horn/sectional area of large horn) with respect to the large horn 12 as a second-step horn for the first-step horn 12, to be capable of enlarging the locus of elliptical vibration.

Thus, the forward end of the step horn part 8 is formed by the small horn 13 having a smaller sectional area than the cylindrical large horn 12, whereby the amount of interference exerted on elliptical vibration can be reduced on the small horn 13 as compared with the conventional single-step horn part 58, for enlarging the locus of elliptical vibration.

The step horn part 8 formed by the large horn 12 and the small horn 12 in the aforementioned embodiment can alternatively be formed in a required multi-step horn shape.

For example, a first-step horn provided on (each end of) the cylindrical body part 7 of the elliptical vibrator 2 may be provided with a second-step horn having a smaller sectional area than the first-step horn, and a third-step horn having a smaller sectional area than the second-step horn may be further provided. Thus, a multi-step horn part prepared by sequentially providing (continuously providing) a single horn with other horns having smaller sectional areas than this horn may be employed.

When sequentially providing a single horn in the step horn part 8 with other horns having smaller sectional areas than this horn, therefore, the amount of interference exerted on elliptical vibration can be reduced on the horn provided on the forward end of the step horn part 8, thereby enlarging the locus of elliptical vibration.

While the step horn part 8 is formed by cylindrical horns in the aforementioned embodiment, the horns can be provided in a proper shape such as an octagonal shape, for example.

Fig. 6 shows the relation between the speed ratio (vibration speed/cutting speed) in elliptical vibration cutting by the elliptical vibration cutting apparatus 1 shown in Figs. 1 and 2 and cutting resistance. Referring to Fig. 6, the cutting resistance is reduced as the speed ratio is increased.

When setting the cutting speed constant and increasing the vibration speed, the cutting resistance is reduced while the force pulling up the chip 19 cut out from the workpiece 5 with the cutting tool 6 is increased to reduce the frictional resistance, thereby reducing the cutting resistance (see Fig. 4).

Fig. 7 shows the relation between the speed ratio (vibration speed/cutting speed) in elliptical vibration by the elliptical vibration cutting apparatus 1 shown in Figs. 1 and 2 and the shear angle θ (see Fig. 4).

Referring to Fig. 7, the shear angle θ is increased as the speed ratio is increased.

When setting the cutting speed constant and increasing the vibration speed, for example, the shear angle θ is increased while an effect of discharging the chip 19 can be prompted, whereby the machinability of the workpiece 5 cut with the cutting tool 6 is improved (see Fig. 4).

The present invention is not restricted to the aforementioned embodiment, but can be arbitrarily and properly modified and selected at need within a range not deviating from the scope of the appended claims.

In the aforementioned embodiment, the mounting part 20 for the cutting tool 6 may alternatively be provided on each side (each step horn part 8) of the elliptical vibrator 2.

Further, a single horizontal surface 14 and a single vertical surface 15 may alternatively be provided on the side surface of the cylindrical body part 7, for providing the piezoelectric element 9 (9a) on the horizontal surface 14 and providing the piezoelectric element 10 (10a) on the vertical surface 15 (two piezoelectric elements 9 and 10).

When the piezoelectric element 9a (or 10a) provided on the horizontal surface 14 (or the vertical surface 15) has the same mounting area as that in the embodiment shown in Figs. 1 and 2, function/effect equivalent to that in the embodiment shown in Figs. 1 and 2 can be attained.

While the horizontal surfaces 14 and the vertical surfaces 15 perpendicular to each other are provided on the side surface of the cylindrical body part 7 of the elliptical vibrator 2 as the surfaces for mounting the piezoelectric elements 9 and 10 in the aforementioned embodiment, at least two surfaces for mounting the piezoelectric elements 9 and 10 provided on the side surface of the cylindrical body part 7 can be set at a proper angle to each other.

Thus, elliptical vibration can be generated in the elliptical vibrator 2 by individually providing the piezoelectric elements 9 and 10 on at least two surfaces for mounting the piezoelectric elements 9 and 10 set at a proper angle to each other.

When the elliptical vibration cutting apparatus 1 shown in Figs. 1 and 2 is driven for elliptical vibration, working heat is generated in the cutting tool 6 (or the vibrator 2) by cutting resistance. Thus, the cutting tool 6 may be deformed by a cutting load. Further, the vibrator 2 itself generates heat due to application of the voltages on the piezoelectric elements 9 and 10. Thus, the locus 16 of elliptical vibration on (the cutting edge of) the cutting tool 6 may remarkably vary with the temperature (e.g., the room temperature of a working room) around the apparatus 1. Consequently, the frequency (e.g., 20 KHz), the amplitude and the phase (e.g., 90 degrees) of elliptical vibration (flexible vibration) generated in the apparatus 1 may be unstabilized.

In order to keep generation of prescribed elliptical vibration in the apparatus 1 against such unstable frequency, amplitude and phase (hereinafter referred to as the frequency etc. of elliptical vibration) of elliptical vibration (the aforementioned two-directional flexible vibration), a required detector (tracking mechanism) 21 is provided on a prescribed position of the elliptical vibrator 2 for individually detecting (tracking) the frequency etc. of the elliptical vibration, for example. In addition, a feedback mechanism 22 is provided for receiving a numeric signal (detection signal) for the frequency etc. of the elliptical vibration from the detector 21 and transmitting a fine control signal (feedback control signal) for finely controlling the frequency etc. of the elliptical vibration to the control mechanism 11 on the basis of a result (tracking result) of detection of the detector 21.

Thus, a prescribed locus of elliptical vibration can be stably formed in the apparatus 1, while elliptical vibration cutting can be stably performed on the workpiece 5 with the cutting tool 6.

In particular, simultaneous resonance frequencies in two directions are frequently deviated. In this case, a mechanism (simultaneous resonance frequency feedback mechanism) of tracking the simultaneous resonance frequencies in the two directions and finely controlling the same can be employed for the apparatus 1.

While the mounting surfaces (planes) for mounting the piezoelectric elements 9 and 10 are provided on the side surface (curved surface) of the cylindrical body part 7 by notching the cylindrical body part 7 including both axial edges in the embodiment shown in Figs. 1 and 2, the mounting surfaces may alternatively be formed on the side surface of the cylindrical body part 7 only by widths corresponding to those of the piezoelectric elements 9 and 10.

While the cutting edge of the cutting tool 6 in the apparatus 1 draws the locus of elliptical vibration in the aforementioned embodiment, this structure includes such a structure that the cutting edge of the cutting tool 6 draws a locus of positive circular vibration by compositing two-directional flexible vibration in the elliptical vibrator 2.

While the piezoelectric elements 9 and 10 generating elliptical vibration in the elliptical vibrator 2 are provided in the aforementioned embodiment, the piezoelectric elements 9 and 10 may be replaced with magnetostrictive elements.

According to the present invention, the locus of elliptical vibration drawn by the cutting tool elliptically vibrated by the elliptical vibrator can be enlarged and the machinability of the workpiece cut with the cutting tool can be improved in the vibration cutting apparatus including the elliptical vibrator.

According to the present invention, further, an elliptical vibration cutting apparatus capable of efficiently converting electrical energy to mechanical energy for efficiently performing elliptical vibration cutting on a workpiece can be provided.

Although the present invention has been described and illustrated in detail, it is clearly understood that the same is by way of illustration and example only and is not to be taken by way of limitation, the scope of the present invention being limited only by the terms of the appended claims.

## Claims

1. An elliptical vibration cutting apparatus (1) comprising an elliptical vibrator (2) for elliptically vibrating a cutting tool (6) for performing cutting while elliptically vibrating said cutting tool (6) with respect to a workpiece (5), wherein the elliptical vibrator includes a body part (7) having an outer peripheral surface, with a plurality of driving members (9, 10) for driving the elliptical vibrator mounted on the body part (7), **characterised in that** the outer peripheral surface includes a curved surface part for reducing interference on elliptical vibration in said elliptical vibrator (2) and enlarging a locus of elliptical vibration on the cutting edge of said cutting tool (6).

2. Elliptical vibration cutting apparatus in accordance with claim 1, wherein the body part (7) is cylindrical.

3. Elliptical vibration cutting apparatus in accordance with claim 1 or 2, wherein
step horn parts (8) for amplifying elliptical vibration are individually projected from both ends of said body part (7), and each said step horn part (8) has a large horn (12) provided on said body part (7) and a small horn (13) provided on said large horn (12).

4. Elliptical vibration cutting apparatus in accordance with claim 3, wherein the large horn and the small horn are cylindrical.

5. Elliptical vibration cutting apparatus in accordance with any of the proceeding claims, further comprising a tracking mechanism (21) for tracking elliptical vibration and a feedback mechanism (22) for finely controlling said elliptical vibration on the basis of a result of tracking by said tracking mechanism (21).

6. Elliptical vibration cutting apparatus in accordance with any one of the preceding claims, further comprising a first support member (3A) and a second support member (3B) for supporting said vibratory tool support body (2), wherein said first and second support members (3A, 3B) are spaced from each other by an on-centre spacing (L) which corresponds to spacing between vibration nodes of said vibratory tool support body (2).

7. Elliptical vibration cutting apparatus in accordance with claim 6, when dependent on claim 3, wherein said first and second support members (3A, 3B) support said step horn parts (8, 12) having a second diameter smaller than said first diameter.

8. Elliptical vibration cutting apparatus in accordance with claim 3, wherein said cylindrical body portion comprises four circumferentially spaced peripheral surface sections, said apparatus further comprising four driving members (9, 9A; 10, 10A) secured to said peripheral surface sections of said cylindrical body portion (7) having said substantially circular cross-section, with said angular on-centre spacing of 90° between neighbouring driving members.

9. Elliptical vibration cutting apparatus in accordance with claim 3 or 8, wherein said cylindrical body portion (7) comprises horizontal and vertical surfaces (14, 15) in said outer peripheral surface whereby said cross-section is substantially circular, said first driving member (9, 9A) being secured to the horizontal surfaces, said second driving member (10, 10A) being secured to the vertical surfaces.

10. An elliptical vibration cutting method erploying an elliptical vibrator (2) for elliptically vibrating a cutting tool (6) for performing cutting while elliptically vibrating said cutting tool (6) with respect to a workpiece, wherein
the elliptical vibrator includes a body part (7) having an outer peripheral surface with a plurality of driving members (9, 10) for driving the elliptical vibrator mounted on the body part (7), **characterised in that** the outer peripheral surface includes a curved surface part for reducing interference on elliptical vibration in said elliptical vibrator (2) and enlarging a locus of vibration on the cutting edge of said cutting tool (6).

11. An elliptical vibration cutting method in accordance with claim 10, wherein
said elliptical vibrator (2) has a step horn part (8) holding said cutting tool (6), and said step horn part (8) is provided in a multi-step horn shape thereby enlarging a locus of elliptical vibration on the cutting edge of said cutting tool (6).

12. The elliptical vibration cutting method in accordance with claim 11, wherein said step horn part (8) is formed by sequentially providing a horn (12) with horns (13) having smaller sectional areas than said horn (12).

13. The elliptical vibration cutting method in accordance with claim 12, wherein said step horn part (8) is provided in a two-step horn shape.

14. An elliptical vibration cutting method in accordance with any one of claims 10 to 12, wherein
said elliptical vibration is tracked and finely controlled thereby stabilizing a locus of elliptical vibration on the cutting edge of said cutting tool (6).

## Patentansprüche

1. Elliptisch schwingende Schneidvorrichtung (1), die einen elliptischen Vibrator (2) umfasst, um ein Schneidwerkzeug (6) in elliptische Schwingungen zu versetzen, um einen Schneidvorgang auszuführen, während das Schneidwerkzeug (6) in Bezug auf ein Werkstück (5) elliptisch schwingt, wobei der elliptische Vibrator einen Körperabschnitt (7) mit einer äußeren Umfangsoberfläche mit mehreren Antriebselementen (9, 10) zum Antreiben des an dem Körperabschnitt (7) angebrachten elliptischen Vibrators umfasst, **dadurch gekennzeichnet, dass** die äußere Umfangsoberfläche einen gekrümmten Oberflächenabschnitt aufweist, um die Störung der elliptischen Schwingungen im elliptischen Vibrator (2) zu verringern und um einen Aufenthaltsort der elliptischen Schwingungen an der Schneidkante des Schneidwerkzeugs (6) zu vergrößern.

2. Elliptisch schwingende Schneidvorrichtung nach Anspruch 1, bei der der Körperabschnitt (7) zylindrisch ist.

3. Elliptisch schwingende Schneidvorrichtung nach Anspruch 1 oder 2, bei der von beiden Enden des Körperabschnitts (7) einzeln Stufenhornabschnitte (8), die die elliptischen Schwingungen verstärken, vorstehen und jeder Stufenhornabschnitt (8) ein am Körperabschnitt (7) vorgesehenes großes Horn (12) und ein am großen Horn (12) vorgesehenes kleines Horn (13) besitzt.

4. Elliptisch schwingende Schneidvorrichtung nach Anspruch 3, bei der das große Horn und das kleine Horn zylindrisch sind.

5. Elliptisch schwingende Schneidvorrichtung nach einem der vorhergehenden Ansprüche, die ferner einen Verfolgungsmechanismus (21) zum Verfolgen der elliptischen Schwingungen und einen Rückkopplungsmechanismus (22) zur Feinsteuerung der elliptischen Schwingungen auf der Grundlage eines Ergebnisses der Verfolgung durch den Verfolgungsmechanismus (21) umfasst.

6. Elliptisch schwingende Schneidvorrichtung nach einem der vorhergehenden Ansprüche, die ferner ein erstes Unterstützungselement (3A) und ein zweites Unterstützungselement (3B) zum Unterstützen des Vibrationswerkzeug-Unterstützungskörpers (2) umfasst, wobei das erste und das zweite Unterstützungselement (3A, 3B) um einen Mittenabstand (L), der dem Abstand zwischen Schwingungsknoten des Vibrationswerkzeug-Unterstützungskörpers (2) entspricht, voneinander beabstandet sind.

7. Elliptisch schwingende Schneidvorrichtung nach Anspruch 6, wenn abhängig von Anspruch 3, bei der das erste und das zweite Unterstützungselement (3A, 3B) jene Stufenhornabschnitte (8, 12), die einen zweiten Durchmesser besitzen, der kleiner als der erste Durchmesser ist, unterstützen.

8. Elliptisch schwingende Schneidvorrichtung nach Anspruch 3, bei der der zylindrische Körperabschnitt vier in Umfangsrichtung beabstandete Umfangsoberflächenabschnitte umfasst, wobei die Vorrichtung ferner vier Antriebselemente (9, 9A; 10, 10A) aufweist, die an den Umfangsoberflächenabschnitten des zylindrischen Körperabschnitts (7), der einen im Wesentlichen kreisförmigen Querschnitt besitzt, befestigt sind, wobei der Winkel-Mittenabstand zwischen benachbarten Antriebselementen 90° beträgt.

9. Elliptisch schwingende Schneidvorrichtung nach Anspruch 3 oder 8, bei der der zylindrische Körperabschnitt (7) in der äußeren Umfangsoberfläche horizontale und vertikale Oberflächen (14, 15) aufweist, wodurch der Querschnitt im Wesentlichen kreisförmig ist, wobei das erste Antriebselement (9, 9A) an den horizontalen Oberflächen befestigt ist und das zweite Antriebselement (10, 10A) an den vertikalen Oberflächen befestigt ist.

10. Verfahren zum Schneiden mit elliptischen Schwingungen, das einen elliptischen Vibrator (2) verwendet, um ein Schneidwerkzeug (6) in elliptische Schwingungen zu versetzen, um einen Schneidvorgang auszuführen, während das Schneidwerkzeug (6) in Bezug auf ein Werkstück elliptisch schwingt, wobei der elliptische Vibrator einen Körperabschnitt (7) mit einer äußeren Umfangsoberfläche mit mehreren Antriebselementen (9, 10) zum Antreiben des an dem Körperabschnitt (7) angebrachten elliptischen Vibrators umfasst, **dadurch gekennzeichnet, dass** die äußere Umfangsoberfläche einen gekrümmten Oberflächenabschnitt aufweist, um die Störung der elliptischen Schwingungen in dem elliptischen Vibrator (2) zu verringern und einen Aufenthaltsort der Schwingungen an der Schneidkante des Schneidwerkzeugs (6) zu vergrößern.

11. Verfahren zum Schneiden mit elliptischen Schwingungen nach Anspruch 10, bei dem der elliptische Vibrator (2) einen Stufenhornabschnitt (8) besitzt, der das Schneidwerkzeug (6) hält, und der Stufenhornabschnitt (8) in einer mehrstufigen Hornform gegeben ist, wodurch ein Aufenthaltsort der elliptischen Schwingungen an der Schneidkante des Schneidwerkzeugs (6) vergrößert wird.

12. Verfahren zum Schneiden mit elliptischen Schwingungen nach Anspruch 11, bei dem der Stufenhornabschnitt (8) dadurch gebildet ist, dass ein Horn (12) aufeinander folgend mit Hörnern (13) mit kleineren Querschnittsflächen als dieses Horn (12) vorgesehen ist.

13. Verfahren zum Schneiden mit elliptischen Schwingungen nach Anspruch 12, bei dem der Stufenhornabschnitt (8) in einer zweistufigen Hornform gegeben ist.

14. Verfahren zum Schneiden mit elliptischen Schwingungen nach einem der Ansprüche 10 bis 12, bei dem die elliptischen Schwingungen verfolgt und feingesteuert werden, wodurch ein Aufenthaltsort der elliptischen Schwingungen an der Schneidkante des Schneidwerkzeugs (6) stabilisiert wird.

## Revendications

1. Appareil de coupe à vibration elliptique (1) comprenant un vibreur elliptique (2) pour faire vibrer d'une façon elliptique un outil de coupe (6) pour exécuter une opération de coupe pendant la vibration elliptique dudit outil de coupe (6) par rapport à une pièce (5), dans lequel le vibreur elliptique comprend une partie de corps (7) présentant une surface périphérique extérieure, avec une pluralité d'éléments de commande (9, 10) pour commander le vibreur elliptique montés sur la partie de corps (7), **caractérisé en ce que** la surface périphérique extérieure comprend une partie de surface courbe destinée à réduire les interférences avec la vibration elliptique dans ledit vibreur elliptique (2), et à agrandir un lieu géométrique de vibration elliptique sur l'arête de coupe dudit outil de coupe (6).

2. Appareil de coupe à vibration elliptique selon la revendication 1, dans lequel la partie de corps (7) est cylindrique.

3. Appareil de coupe à vibration elliptique selon la revendication 1 ou 2, dans lequel:
des parties de mandrin étagées (8) pour amplifier la vibration elliptique sont individuellement saillantes à partir des deux extrémités de ladite partie de corps (7), chacune desdites parties de mandrin étagées (8) comprenant un grand mandrin (12) monté sur ladite partie de corps (7) et un petit mandrin (13) monté sur ledit grand mandrin (12).

4. Appareil de coupe à vibration elliptique selon la revendication 3, dans lequel le grand mandrin et le petit mandrin sont cylindriques.

5. Appareil de coupe à vibration elliptique selon l'une quelconque des revendications précédentes, comprenant en outre un mécanisme de détection (21) pour détecter la vibration elliptique, et un mécanisme de réaction (22) pour contrôler avec précision ladite vibration elliptique sur la base d'un résultat de détection fourni par ledit mécanisme de détection (21).

6. Appareil de coupe à vibration elliptique selon l'une quelconque des revendications précédentes, comprenant en outre un premier élément de support (3A) et un deuxième élément de support (3B) pour supporter ledit corps de support (2) de l'outil vibrant, dans lequel lesdits premier et deuxième éléments de support (3A, 3B) sont espacés l'un de l'autre par un espacement centré (L) correspondant à un espacement entre des noeuds de vibration dudit corps de support (2) de l'outil vibrant.

7. Appareil de coupe à vibration elliptique selon la revendication 6, lorsqu'elle dépend de la revendication 3, dans lequel lesdits premier et deuxième éléments de support (3A, 3B) supportent lesdites parties de mandrin étagées (8, 12) qui présentent un deuxième diamètre plus petit que ledit premier diamètre.

8. Appareil de coupe à vibration elliptique selon la revendication 3, dans lequel ladite partie de corps cylindrique comprend quatre sections de surface périphériques circonférentiellement espacées, ledit appareil comprenant en outre quatre éléments de commande (9, 9A; 10, 10A) fixés auxdites sections de surface périphériques de ladite partie de corps cylindrique (7) présentant une section transversale essentiellement circulaire, avec ledit espacement centré angulaire de 90° entre des éléments de commande voisins.

9. Appareil de coupe à vibration elliptique selon la revendication 3 ou 8, dans lequel ladite partie de corps cylindrique (7) comprend des surfaces horizontales et verticales (14, 15) dans ladite surface périphérique extérieure, dans lequel ladite section transversale est essentiellement circulaire, ledit premier élément de commande (9, 9A) étant fixé aux surfaces horizontales, ledit deuxième élément de commande (10, 10A) étant fixé aux surfaces verticales.

10. Méthode de coupe à vibration elliptique employant un vibreur elliptique (2) pour faire vibrer d'une façon elliptique un.outil de coupe (6) pour exécuter une opération de coupe pendant la vibration elliptique dudit outil de coupe (6) par rapport à une pièce, dans lequel:
le vibreur elliptique comprend une partie de corps (7) présentant une surface périphérique extérieure, avec une pluralité d'éléments de commande (9, 10) pour commander le vibreur elliptique montés sur la partie de corps (7),
**caractérisée en ce que** la surface périphérique extérieure comprend une partie de surface courbe destinée à réduire les interférences avec la vibration elliptique dans ledit vibreur elliptique (2), et à agrandir un lieu géométrique de vibration sur l'arête de coupe dudit outil de coupe (6).

11. Méthode de coupe à vibration elliptique selon la revendication 10, dans laquelle:
ledit vibreur elliptique (2) comprend une partie de mandrin étagée (8) supportant ledit outil de coupe (6), et ladite partie de mandrin étagée (6) se présente sous forme de mandrin à étages multiples, agrandissant ainsi un lieu géométrique de vibration elliptique sur l'arête de coupe dudit outil de coupe (6).

12. Méthode de coupe à vibration elliptique selon la revendication 11, dans laquelle ladite partie de mandrin étagée (8) est formée en équipant d'une façon séquentielle un mandrin (12) de mandrins (13) présentant des surfaces de section plus petites que ledit mandrin (12).

13. Méthode de coupe à vibration elliptique selon la revendication 12, dans laquelle ladite partie de mandrin étagée (8) se présente sous la forme d'un mandrin à deux étages.

14. Méthode de coupe à vibration elliptique selon l'une quelconque des revendications 10 à 12, dans laquelle:
ladite vibration elliptique est détectée et contrôlée avec précision, stabilisant ainsi un lieu géométrique de vibration elliptique sur l'arête de coupe dudit outil de coupe (6).
